# EUROPÄISCHE PATENTSCHRIFT

(11) **EP 0 565 917 B1**
(45) Veröffentlichungstag und Bekanntmachung des Hinweises auf die Patenterteilung: **20.11.1996**
(21) Anmeldenummer: 93104809.4
(22) Anmeldetag: 24.03.1993
(51) Int. Cl.: B29C 49/56, B29C 33/26, B29C 33/20, C03B 9/353

(54) **Vorrichtung zur Blasformung**
Blow-moulding device
Dispositif de moulage par soufflage

(30) Priorität: 15.04.1992 DE 4212583
(43) Veröffentlichungstag der Anmeldung: 20.10.1993
(73) Patentinhaber: KRUPP CORPOPLAST MASCHINENBAU GMBH, 22123 Hamburg (DE)
(72) Erfinder: Linke, Michael, W-2070 Ahrensburg (DE); Peterko, Marek, W-2082 Tornesch (DE); Albrecht, Peter, W-2050 Hamburg 80 (DE)
(74) Vertreter: Klickow, Hans-Henning

(56) Entgegenhaltungen:
- EP-A- 0 308 605
- FR-A- 1 503 823
- FR-A- 2 552 709
- FR-A- 2 659 265
- GB-A- 1 230 090

## Beschreibung

Die Erfindung betrifft eine Vorrichtung zur Blasformung von thermoplastischem Kunststoff, die eine aus mindestens zwei Blasformelementen bestehende Blasform aufweist, die mit einem zur Formgebung eines herzustellenden Behälters vorgesehenen Innenraum versehen ist und bei der die Blasformelemente im Bereich von verschwenkbar gelagerten Formträgern angeordnet sind sowie die Formträger auf einer Welle geführt sind und bei der die Formträger im Bereich ihrer der Welle zugewandten Ausdehnung die Welle mit Betätigungsarmen überragen, die über Kopplungshebel drehbeweglich mit einem Verstellelement gekoppelt sind, das im wesentlichen in Richtung einer Mittellinie der Blasform geführt ist.

Derartige Vorrichtungen werden sowohl im Bereich von rotierend angetriebenen Blasrädern als auch im Bereich von stationären Einrichtungen verwendet. Mit Hilfe der Blasform werden beispielsweise aus Vorformlingen, die in einem Spritzgußverfahren aus Polyäthylenterephthalat hergestellt werden, Behälter geblasen, die zur Aufnahme von Getränken oder anderen Produkten geeignet sind.

Bei den bislang verwendeten Vorrichtungen erfüllen die konstruktiven Realisierungen zur Durchführung von Öffnungs- und Schließbewegungen nicht alle Anforderungen, die an eine einfache Gestaltung, eine lange Lebensdauer sowie eine preiswerte Fertigung gestellt werden.

Aus GB-A-1 230 090 ist es bereits bekannt, zur Formgebung für thermoplastische Kunststoffbehälter Blasformhälften zu verwenden, die einen Innenraum umschließen. Die Blasformelemente sind im Bereich von Formträgern angeordnet, die auf einer Welle geführt sind. Zur Positionierung der Formträger sind Betätigungsarme vorgesehen, die über Kopplungshebel mit einem Verstellelement verbunden sind. Durch eine Bewegung des Verstellelementes in Richtung einer Mittellinie der Blasform erfolgt durch die gelenkartig miteinander verbundenen Betätigungarme und die Kopplungshebel eine Öffnungs- oder Schließbewegung der Formträger.

Aus der FR-A-2 659 265 ist es ebenfalls bekannt, Tragelemente für Blasformhälften zur Formgebung von thermoplastischen Materialien über ein Hebelgestänge zu positionieren. Auch hier sind die Blasformhälften im Bereich einer Welle verschwenkbar gelagert. Das Verstellelemente führt jedoch keine lineare Bewegung durch, sondern durch eine entsprechende Lagerung sowie die Kopplung mit einem zugeordneten Hebel wird eine kreisförmige Bewegung um den Drehpunkt des Hebels durchgeführt. Die Formträger sind direkt über Kopplungshebel an das Verstellelement angeschlossen. Bei einer mechanischen Belastung der Formträger in einem geöffneten Zustand kann deshalb durch Kraftübertragung eine ungewollte Schließbewegung durchgeführt werden.

Aufgabe der vorliegenden Erfindung ist es, eine Vorrichtung der einleitend genannten Art derart zu verbessern, daß eine übersichtliche mechanische Gestaltung geschaffen und eine einfache Betätigungsmöglichkeit bereitgestellt wird sowie eine Erhöhung der Betriebssicherheit erfolgt.

Diese Aufgabe wird erfindungsgemäß dadurch gelöst, daß im Bereich von der Welle abgewandt angeordneten Enden der Formträger eine Verriegelungseinrichtung vorgesehen ist, daß die Betätigungsarme jeweils als über die Welle hinausweisende Verlängerungen der zugeordneten Formträger ausgebildet sind und daß die Kopplungshebel in einer geöffneten Positionierung der Formträger zur Realisierung einer Selbsthemmung derart relativ zu den Betätigungsarmen angewinkelt sind, daß das Verstellelement bei einer Kraftbeaufschlagung der Formträger in einander zugewandte Richtungen in Richtung auf die Welle mit einer Verstellkraft beaufschlagt wird.

Durch die Führung der Formträger auf der Welle entsteht bei einer geschlossenen Form ein Kraftlinienverlauf durch die Welle hindurch. Hierdurch werden günstige Krafteinleitungen ermöglicht. Darüber hinaus sind zusätzliche Verriegelungs einrichtungen im Bereich von der Welle zugewandten Enden der Formträger entbehrlich. Mit Hilfe der Verriegelungseinrich tung im Bereich der der Welle abgewandten Enden wird eine mechanische Verbindung der Formträger in einem geschlossenen Zustand geschaffen. Die Betätigungsarme ermöglichen eine Bewegung der Formträger nach dem Betätigungsprinzip einer Schere. Durch die Verbindung des Verstellelementes über die Kopplungshebel mit den Betätigungsarmen ist es möglich, eine lineare Bewegung in Richtung der Mittellinie der Blasform in eine Schließbewegung umzusetzen, ohne daß hierzu eine auf wendige Mechanik erforderlich wäre. Die Betätigung der Form träger erfolgt somit rein mechanisch, so daß zu jedem Be triebszeitpunkt eine exakt definierte Positionierung vorgegeben ist. In Ausnahmezuständen ist deshalb zu beliebigen Zeitpunkten ein Abbruch der jeweiligen Bewegungsabläufe und ein Festsetzen der bewegten Elemente in der jeweiligen Posi tionierung möglich. Hieraus resultiert eine erhebliche Verringerung der Unfallgefahren.

Gemäß der Erfindung ist vorgesehen, den Anlenkhebel und die Kopplungshebel derart relativ zueinander anzuordnen, daß in einer geöffneten Positionierung der Formträger eine Selbsthemmung realisiert ist. Durch diese Selbsthemmung werden die Unfallgefahren durch unbeab sichtigte Formschließbewegungen erheblich vermindert. Insbesondere ist es möglich, eine aktive Steuereinwirkung auf das Verstellelement nur dann vorzusehen, wenn auch tatsächlich Positionsveränderungen vorzunehmen sind. Auch hieraus resultiert eine vereinfachte mechanische Konstruktion.

Gemäß einer bevorzugten Ausführungsform der Erfindung ist vorgesehen, daß das Verstellelement als eine Rolle ausgebildet ist, die von einem Anlenkhebel in Richtung der Mittel linie positioniert wird, der im Bereich eines der Rolle abgewandten Endes mit einer Welle verbunden ist. Bei dieser Ausführungsform ist es in einfacher Weise möglich, die Betätigungselemente mit einer vorgebbaren räumlichen Entfernung zu den Formträgern anzuordnen und eine Steuereinrichtung beispielsweise oberhalb oder unterhalb der Formträger vorzusehen. Hierdurch werden die konstruktiven Freiheiten bei einer Anordnung der Vorrichtung im Bereich einer Blasmaschine erhöht.

Gemäß einer weiteren bevorzugten Ausführungsform ist mindestens eines der Blasformelemente relativ zu einem Formträger verspannbar angeordnet. Durch diese verspannbare Anordnung ist es möglich, nach einem Schließen der Formträger und einer Betätigung der Verriegelungseinrichtung eine Vorspannung auf die Blasformelemente aufzubringen, die eine Spaltbildung bei einer Expansion des thermoplastischen Vorformlings durch Druckeinwirkung verhindert. Hierdurch können Behälter genau vorgegebener Dimensionierung produziert werden, deren äußere Gestaltung frei von Spaltabbildungen ist, die das ästhetische Erscheinungsbild beeinträchtigen würden.

Weitere Einzelheiten der vorliegenden Erfindung ergeben sich aus der nachfolgenden ausführlichen Beschreibung und den beigefügten Zeichnungen, in denen eine bevorzugte Ausführungsform der Erfindung beispielsweise veranschaulicht sind.

In den Zeichnungen zeigen:
- Fig. 1:: Eine Prinzipdarstellung der Funktion der Verstellung der Formträger in einem geöffneten Zustand,
- Fig. 2:: eine Darstellung entsprechend Fig. 1 in einem geschlossenen Zustand,
- Fig. 3:: eine perspektivische Darstellung eines Teiles einer Blasstation,

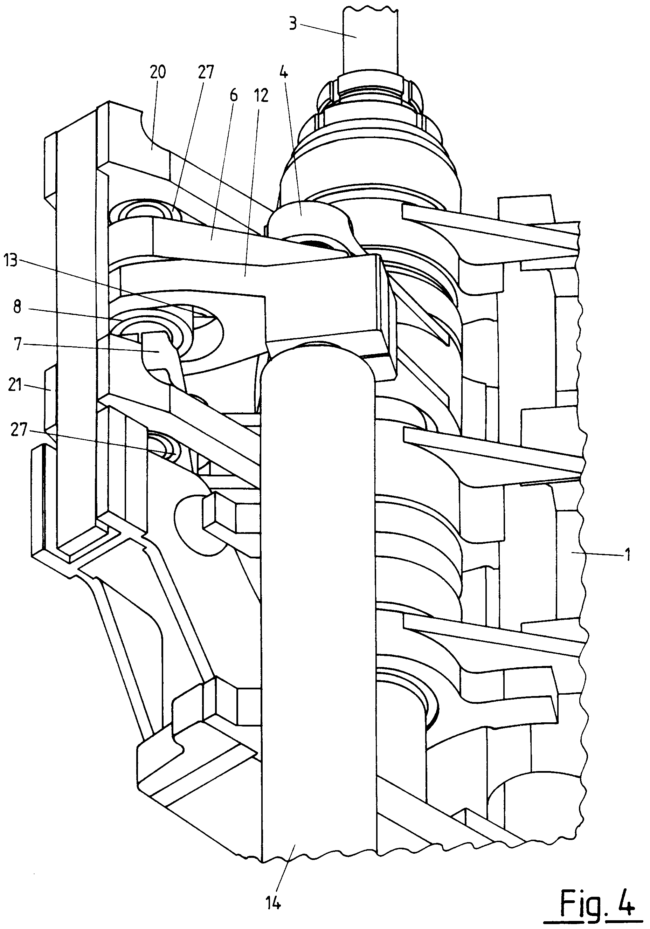

- Fig. 4:: eine andere perspektivische Darstellung der Vorrichtung gemäß Fig. 3,
- Fig. 5:: einen Horizontalschnitt durch eine geschlossene Blasstation, in der ein Adapter zur Halterung eines Blasformelementes verspannbar gegenüber dem ihm zugeordneten Formträger angeordnet ist,
- Fig. 6:: eine Seitenansicht der Blasstation im Bereich einer Verriegelungseinrichtung **und**

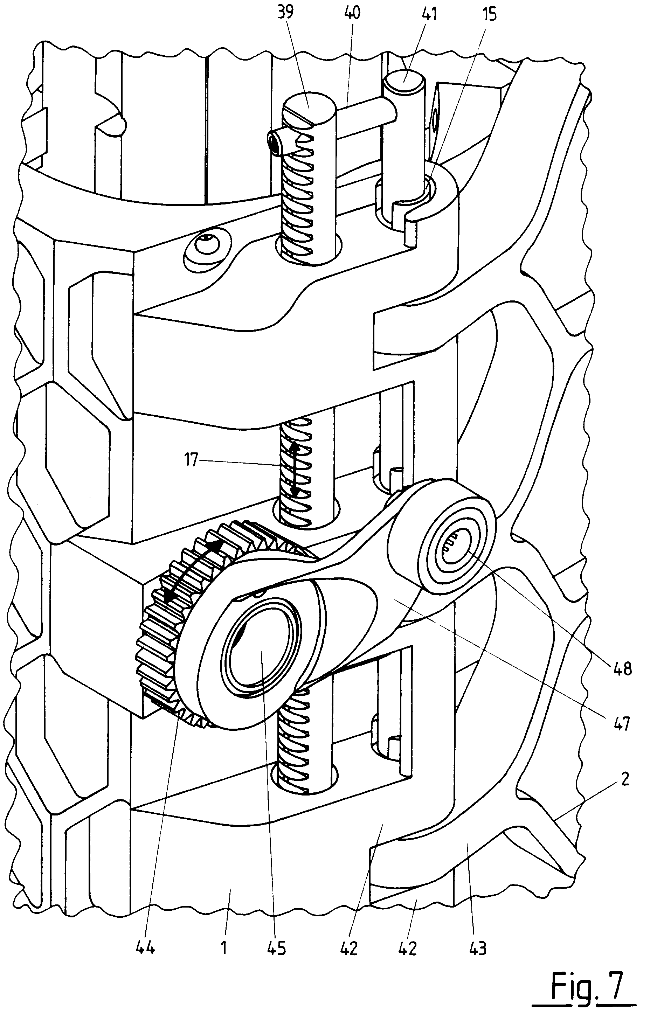

- Fig. 7:: eine perspektivische Darstellung der Blasstation im Bereich der Verriegelungseinrichtung.

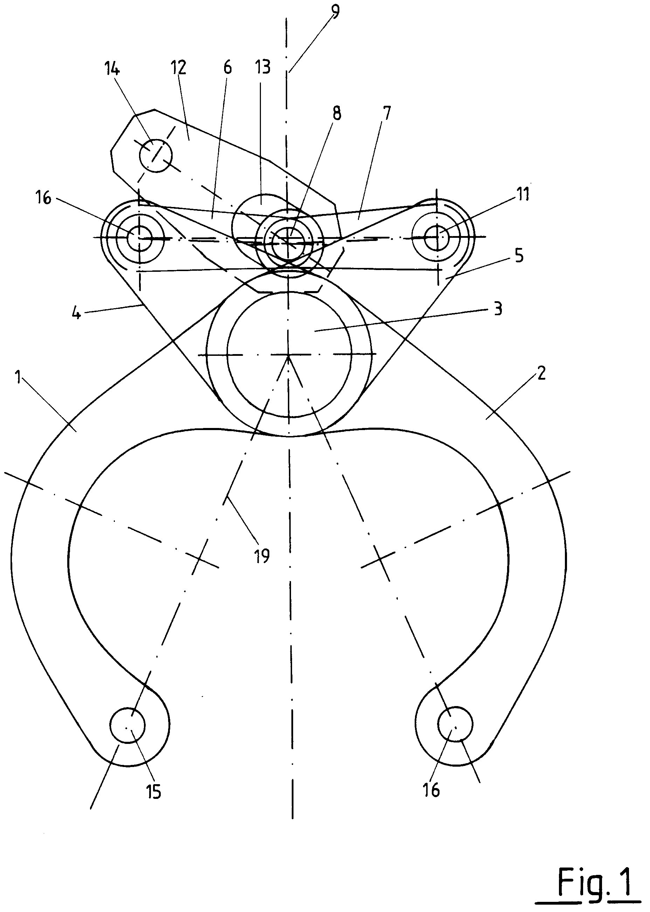

Aus Fig. 1 ist ersichtlich, daß die Vorrichtung zur Blasformung im wesentlichen aus zwei verschwenkbar gelagerten Formträgern (1,2) ausgebildet ist, die im Bereich einer Welle (3) geführt sind. Die Formträger (1,2) überragen die Welle (3) mit Betätigungsarmen (4,5), die über Kupplungshebel (6,7) mit einem Verstellelement (8) verbunden sind. Das Verstellelement (8) ist als eine Rolle ausgebildet, die in Richtung einer Mittellinie (9) einer mit den Formträgern (1,2) versehenen Blasstation beweglich geführt ist. Zur Verbindung der Betätigungsarme (4,5) mit den Kopplungshebeln (6,7) sind Schwenklager (10,11) vorgesehen.

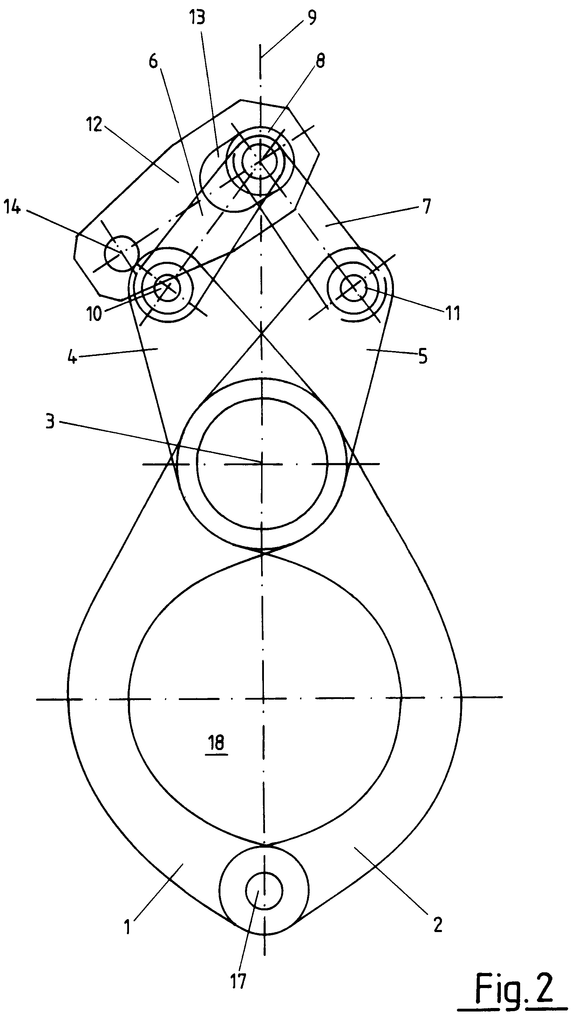

Zur Positionierung des Verstellelementes (8) ist ein Anlenkhebel (12) vorgesehen, der mit einem das Verstellelement (8) führenden Längsschlitz (13) versehen ist. Im Bereich seines dem Längsschlitz (13) abgewandten Endes ist der Anlenkhebel (12) mit einer Welle (14) verbunden, die eine definierte Verschwenkung des Anlenkhebels (12) und damit einer Positionierung des Verstellelementes (8) entlang der Mittellinie (9) ermöglicht. Im Bereich der dem Betätigungsarm (4,5) abgewandten Enden der Formträger (1,2) sind Ausnehmungen (15,16) vorgesehen, in die bei der in Fig. 2 dargestellten verschlossenen Positionierung eine Verriegelungseinrichtung (17) eingreift.

Zur Aufnahme von Blasformelementen weisen die Formträger (1,2) geschwungene Konturen auf, die einen Innenraum (18) seitlich begrenzen. In der in Fig. 1 dargestellten geöffneten Positionierung spannen die Formträger (1,2) einen Öffnungswinkel (19) auf. Dieser kann beispielsweise 48 Grad betragen.

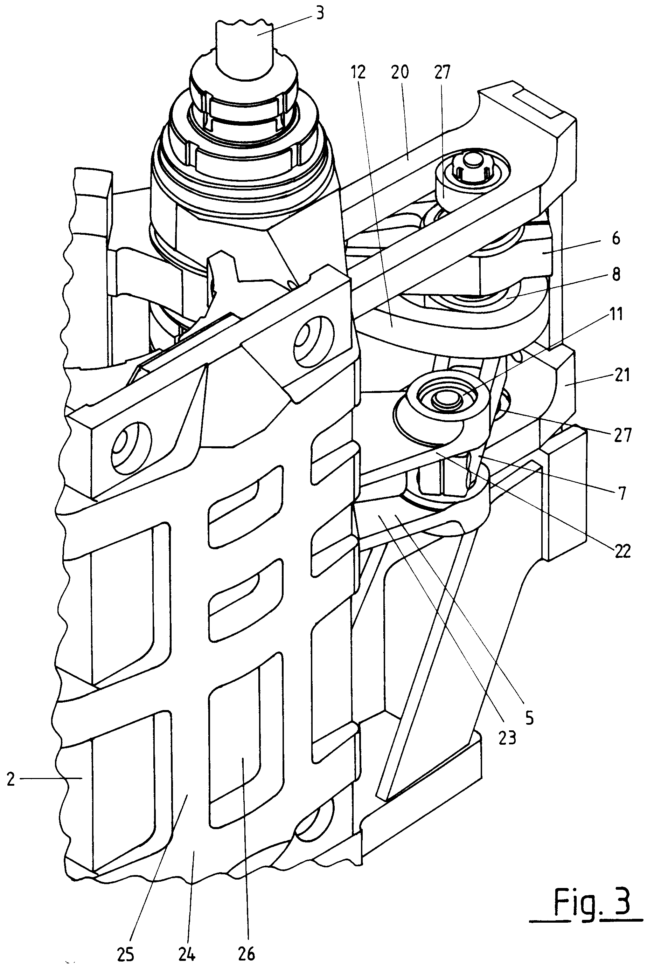

Aus der perspektivischen Darstellung gemäß Fig. 3 ist ersichtlich, daß zur Gewährleistung einer definierten Krafteinleitung in die Formträger (1,2) zwei Führungsrollen (27) vorgesehen sind, die jeweils in Schienen (20,21) geführt sind, die sich in Richtung der Mittellinie (9) erstrecken.

Die Betätigungsarme (4,5) bestehen jeweils aus mit einem Abstand zueinander angeordneten Stegen (22,23), zwischen denen im Bereich der Schwenklager (10,11) die Kopplungshebel (6,7) geführt sind. Im Bereich einer äußeren Begrenzung der Formträger (1,2) ist eine Konturierung (24) vorgesehen, die im wesentlichen aus stegförmigen Versteifungen (25) ausgebildet ist, die Vertiefungen (26) umgeben.

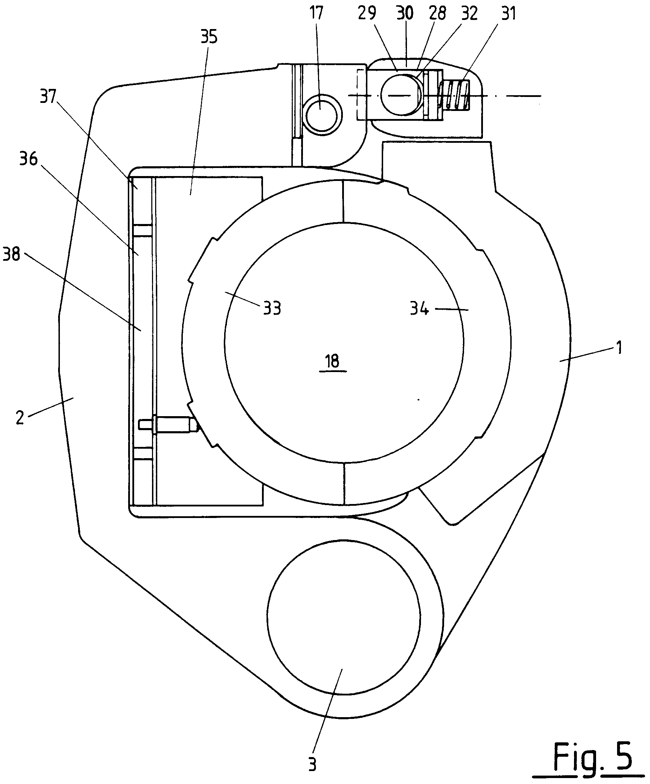

Zur Vermeidung einer unbeabsichtigten Verstellung der Verriegelungseinrichtung (17) ist gemäß Fig. 5 ein Sicherungselement (28) vorgesehen, das insbesondere Positionsveränderungen der Verriegelungseinrichtung (17) aufgrund deren Eigengewichtes verhindert. Das Sicherungselement (28) besteht im wesentlichen aus einem Sperrelement (29), das in einer Ausnehmung (30) verschieblich geführt und von einer Feder (31) beaufschlagt ist. Insbesondere ist daran gedacht, das Sperrelement (29) mit einem Langloch (32) zu versehen, durch das die Verriegelungseinrichtung (17) bereichsweise geführt ist.

Zur Ermöglichung einer Verspannung von Blasformelementen (33,34) relativ zueinander ist im Bereich eines der Formträger (1,2) ein Adapter (35) vorgesehen, der relativ zum Formträger (1,2) mit einer Verstellkraft beaufschlagt werden kann. Zum Aufbringen der Verspannkraft ist ein Stellelement (36) vorgesehen, das beispielsweise als ein von einem Halterungsring (37) umgebener Kolben (38) ausgebildet sein kann. Zur Verstellung des Kolbens (38) kann beispielsweise ein hydraulisches oder pneumatisches Druckmedium vorgesehen werden.

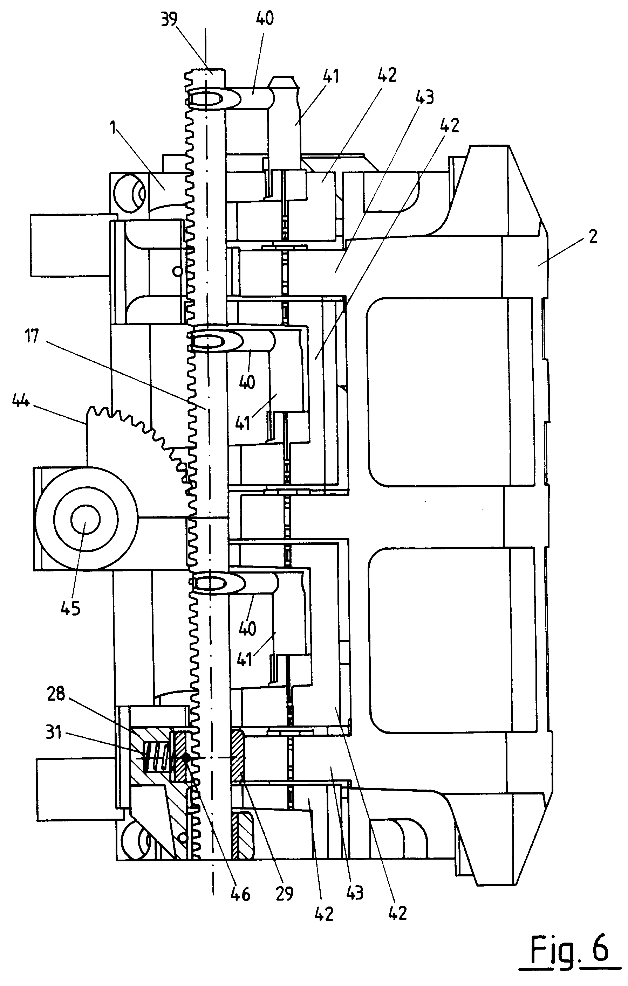

Eine detaillierte Darstellung der Verriegelungseinrichtung (17) ist in Fig. 6 abgebildet. Die Verriegelungseinrichtung (17) besteht im wesentlichen aus einer Zahnstange (39), die über Querträger (40) mit Verriegelungsbolzen (41) verbunden ist. Die Verriegelungsbolzen (41) erstrecken sich im wesentlichen parallel zur Zahnstange (39). Zur Durchführung einer Verriegelung werden die Verriegelungsbolzen (41) in die Ausnehmungen (15,16) der Formträger (1,2) eingeführt. Die Ausnehmungen (15,16) werden dabei im Bereich von Vorsprüngen (42,43) der Formträger (1,2) angeordnet. Insbesondere ist daran gedacht, drei Verriegelungsbolzen (41) vorzusehen und jeden der Verriegelungsbolzen (41) durch drei Vorsprünge (42,43) hindurchzuführen, von denen jeweils zwei mit einem der Formträger (1,2) und der verbleibende Vorsprung (42,43) mit dem anderen Formträger (1,2) verbunden ist. Zum Ausgleich von Fertigungstoleranzen ist insbesondere daran gedacht, die Verriegelungsbolzen (41) über die Querträger (40) kardanisch an der Zahnstange (39) aufzuhängen.

Zur Verstellung der Zahnstange (39) ist ein Zahnrad (44) vorgesehen, das beispielsweise auch als Radsegment ausgebildet sein kann. Eine Verstellung des Zahnrades (44) erfolgt über eine Verriegelungswelle (45). Aus dem in Fig. 6 dargestellten Längsschnitt durch das Sicherungselement (28) ist ersichtlich, daß das Sperrelement (29) im wesentlichen buchsenförmig ausgebildet ist und im Bereich eines Teiles der Erstreckung des Langloches (32) ein Eingriffelement (46) angeordnet ist, das sich bei einer Auslenkung der Feder (31) in die Verzahnung der Zahnstange (39) einfügt und eine Verschiebung der Zahnstange (39) verhindert. Eine Entriegelung des Sicherungselementes (28) erfolgt automatisch bei einem Schließen der Blasstation. Bei einer Anordnung des Sicherungselementes (28) im Bereich des Formträgers (1) kann die Positionierung des Sperrelementes (29) mit Hilfe des Vorsprunges (43) erfolgen, der zwischen die mit dem Formträger (1) verbundenen Vorsprünge (42) eingreift.

Zur Verstellung des Zahnrades (44) kann ein Hebel (47) vorgesehen werden, der über ein Schwenklager (48) an ein Positionierelement anschließbar ist.

Bei einer Anordnung der Formträger (1,2) im Bereich eines rotierenden Blasrades ist es in einfacher Weise möglich, eine Kurvensteuerung vorzusehen, die über Rollen abgetastet wird. Hierdurch wird eine eindeutige Zuordnung der Positionierbewegungen der Formträger (1,2) sowie der Verriegelungseinrichtung (17) zur Rotationspositionierung des Blasrades ermöglicht. Die jeweiligen Kurvensegmente brauchen sich jeweils nur über denjenigen Bereich zu erstrecken, in dem auch tatsächlich Positionsveränderungen durchgeführt werden müssen. Unbeabsichtigte Positionsveränderungen der Verriegelungseinrichtung (17) werden durch das Sicherungselement (8) verhindert und eine Sicherung der Formträger (1,2) in einer geöffneten Positionierung erfolgt durch das Kniehebelprinzip der Kombination aus den Betätigungsarmen (4,5), den Kopplungshebeln (6,7) und dem Verstellelement (8).

## Patentansprüche

1. Vorrichtung zur Blasformung von thermoplastischem Kunststoff, die eine aus mindestens zwei Blasformelementen bestehende Blasform aufweist, die mit einem zur Formgebung eines herzustellenden Behälters vorgesehenen Innenraum (18) versehen ist und bei der die Blasformelemente (33,34) im Bereich von verschwenkbar gelagerten Formträgern (1,2) angeordnet sind sowie die Formträger (1,2) auf einer Welle (3) geführt sind und bei der die Formträger (1,2) im Bereich ihrer der Welle (3) zugewandten Ausdehnung die Welle (3) mit Betätigungsarmen (4,5) überragen, die über Kopplungshebel (6,7) drehbeweglich mit einem Verstellelement (8) gekoppelt sind, das im wesentlichen in Richtung einer Mittellinie (9) der Blasform geführt ist, dadurch gekennzeichnet, daß im Bereich von der Welle (3) abgewandt angeordneten Enden der Formträger (1,2) eine Verriegelungseinrichtung (17) vorgesehen ist, daß die Betätigungsarme (4,5) jeweils als über die Welle (3) hinausweisende Verlängerungen der zugeordneten Formträger (1,2) ausgebildet sind und daß die Kopplungshebel (6,7) in einer geöffneten Positionierung der Formträger (1,2) zur Realisierung einer Selbsthemmung derart relativ zu den Betätigungsarmen (4,5) angewinkelt sind, daß das Verstellelement (8) bei einer Kraftbeaufschlagung der Formträger (1,2) in einander zugewandte Richtungen in Richtung auf die Welle (3) mit einer Verstellkraft beaufschlagt wird.

2. Vorrichtung nach Anspruch 1, dadurch gekennzeichnet, daß zur Positionierung des Verstellelementes (8) ein Anlenkhebel (12) vorgesehen ist, der einen das Verstellelement (8) führenden Längsschlitz (13) aufweist und im Bereich seiner dem Verstellelement (8) abgewandten Ausdehnung mit einer Welle (14) zur Vorgabe einer Drehpositionierung verbunden ist.

3. Vorrichtung nach Anspruch 1 oder 2, dadurch gekennzeichnet, daß zur Positionierung des Verstellelementes (8) eine von Kurvenrollen abgetastete Kurvensteuerung vorgesehen ist.

4. Vorrichtung nach Anspruch 3, dadurch gekennzeichnet, daß die Kurvensteuerung aus Kurvensegmenten ausgebildet ist, die stationär im Bereich eines rotationsfähig gelagerten Blasrades angeordnet sind.

5. Vorrichtung nach einem der Ansprüche 1 bis 4, dadurch gekennzeichnet, daß der Anlenkhebel (12) zur Führung des Verstellelementes (8) einen Längsschlitz (13) aufweist.

6. Vorrichtung nach einem der Ansprüche 1 bis 5, dadurch gekennzeichnet, daß der Anlenkhebel (12) im Bereich seiner dem Verstellement (8) abgewandten Ausdehnung mit einer Welle (14) zur Verbindung mit einem Steuerelement versehen ist.

7. Vorrichtung nach einem der Ansprüche 1 bis 6, dadurch gekennzeichnet, daß das Verstellelement (8) über Verbindungsteile mit Führungsrollen (27) verbunden ist, die im Bereich von Schienen (20,21) geführt sind, die sich in Richtung der Mittellinie (9) erstrecken.

8. Vorrichtung nach einem der Ansprüche 1 bis 7, dadurch gekennzeichnet, daß die Verriegelungseinrichtung (17) als eine Zahnstange (39) ausgebildet ist, die über Querträger (40) mit Verriegelungsbolzen (41) verbunden ist, die in Ausnehmungen (15,16) der Formträger (1,2) eingreifen.

9. Vorrichtung nach Anspruch 8, dadurch gekennzeichnet, daß die Verriegelungsbolzen (41) relativ zur Zahnstange (39) kardanisch aufgehängt sind.

10. Vorrichtung nach einem der Ansprüche 1 bis 9, dadurch gekennzeichnet, daß der Formträger (1,2) Vorsprünge (42) aufweist, die jeweils mit einer Ausnehmung (15) versehen sind und zwischen denen in einer geschlossenen Positionierung ein mit dem Formträger (2) verbundener Vorsprung (43) geführt ist, der mit der Ausnehmung (16) versehen ist.

11. Vorrichtung nach einem der Ansprüche 1 bis 10, dadurch gekennzeichnet, daß zur Fixierung der Zahnstange (39) in einer geöffneten Positionierung der Formträger (1,2) ein Sicherungselement (28) vorgesehen ist, das ein Sperrelement (29) aufweist, das bei einem Schließen der Formträger (1,2) in eine entriegelte Positionierung ausgelenkt wird.

12. Vorrichtung nach einem der Ansprüche 1 bis 11, dadurch gekennzeichnet, daß eines der Blasformelemente (33,34) relativ zu einem der Formträger (1,2) von einem Stellelement (36) verspannbar angeordnet ist.

## Claims

1. Device for blow moulding a thermoplastic plastics material, comprising a blow mould which consists of at least two blow mould elements and is provided with an interior space (18) for shaping a container which is to be produced, the blow mould elements (33, 34) being disposed in the region of pivotably mounted mould supports (1, 2), and the mould supports (1, 2) being guided on a shaft (3) and projecting with operating arms (4, 5) beyond the shaft (3) in the region of their extent which faces the shaft (3), which arms are coupled in a rotatable manner via coupling levers (6, 7) to a displacement element (8) which is essentially guided in the direction of a centre line (9) of the blow mould, characterised in that a locking device (17) is provided in the region of ends of the mould supports (1, 2) which are distant from the shaft (3), that the operating arms (4, 5) are in each case formed as extensions of the associated mould supports (1, 2) which point out beyond the shaft (3), and that in order to achieve automatic locking when the mould supports (1, 2) are in an open position the coupling levers (6, 7) are disposed at an angle relative to the operating arms (4, 5) such that the displacement element (8) is acted upon by a displacement force in the direction of the shaft (3) when the mould supports (1, 2) are acted upon by forces directed towards one another.

2. Device according to claim 1, characterised in that an articulated lever (12) is provided to position the displacement element (8), which lever comprises a longitudinal slot (13) for guiding the displacement element (8) and is connected in the region of its extent which is distant from the displacement element (8) to a shaft (14) for presetting a rotational position.

3. Device according to claim 1 or 2, characterised in that a cam control which is sensed by cam rollers is provided to position the displacement element (8).

4. Device according to claim 3, characterised in that the cam control is formed from cam segments which are disposed in a stationary manner in the region of a rotatably mounted blow wheel.

5. Device according to any one of claims 1 to 4, characterised in that the articulated lever (12) comprises a longitudinal slot (13) for guiding the displacement element (8).

6. Device according to any one of claims 1 to 5, characterised in that the articulated lever (12) is provided in the region of its extent which is distant from the displacement element (8) with a shaft (14) for connection to a control element.

7. Device according to any one of claims 1 to 6, characterised in that the displacement element (8) is connected via connection parts to guide rollers (27) which are guided in the region of rails (20, 21) extending in the direction of the centre line (9).

8. Device according to any one of claims 1 to 7, characterised in that the locking device (17) is formed as a rack (39) which is connected via cross members (40) to locking pins (41) which engage in recesses (15, 16) in the mould supports (1, 2).

9. Device according to claim 8, characterised in that the locking pins (41) are linked by a cardan-type joint to the rack (39).

10. Device according to any one of claims 1 to 9, characterised in that the mould support (1,2) comprises projections (42) which are each provided with a recess (15) and between which a projection (43) connected to the mould support (2) and provided with the recess (16) is guided in a closed position.

11. Device according to any one of claims 1 to 10, characterised in that a safety element (28) is provided to fix the rack (39) when the mould supports (1, 2) are in an open position, which safety element comprises a retaining element (29) which is deflected into an unlocked position when the mould supports (1, 2) are closed.

12. Device according to any one of claims 1 to 11, characterised in that one of the blow mould elements (33, 34) is disposed such that it can be tensioned relative to one of the mould supports (1, 2) by an actuating element (36).

## Revendications

1. Dispositif de soufflage d'une matière thermoplastique, ce dispositif comportant un moule de soufflage, qui consiste en au moins deux éléments de moule et qui présentent un espace intérieur (18) prévu pour le façonnage d'un récipient à fabriquer, les éléments de moule (33, 34) étant disposés dans la zone de porte-moule (1, 2) montés basculants, les porte-moule (1, 2) étant guidés sur un arbre (3) et les porte-moule (1, 2) dépassant de l'arbre (3) par des bras d'actionnement (4, 5) dans la zone de leur étendue tournée vers l'arbre (3), tandis que ces bras sont reliés, de manière à pouvoir tourner, par l'intermédiaire de leviers d'accouplement (6, 7) à un élément de réglage (8), qui est guidé sensiblement dans la direction d'une ligne médiane (9)du moule de soufflage, caractérisé par le fait qu'il est prévu un dispositif de verrouillage (17) dans la zone des extrémités des porte-moule (1, 2), orientées à l'opposé de l'arbre (3), que les bras d'actionnement (4, 5) sont réalisés chacun sous la forme de prolongements, dépassant au-dessus de l'arbre (3), des porte-moule (1, 2) associés et que, dans une position ouverte des porte-moule (1, 2), les leviers d'accouplement (6, 7) font, pour réaliser un blocage automatique, un angle tel avec les bras d'actionnement (4, 5), que l'élément de réglage (8), en présence d'une sollicitation des porte-moule (1, 2) l'un vers l'autre, est sollicité en direction de l'arbre (3) avec une force réglage.

2. Dispositif selon la revendication 1, caractérisé par le fait qu'il est prévu, pour le positionnement de l'élément de réglage (8), un levier articulé (12), qui présente une fente longitudinale (13) pour le guidage de l'élément de réglage (8) et qui est relié, dans la zone de son étendue tournée à l'opposé de l'élément de réglage (8), à un arbre (14) pour prédéfinir une position de rotation.

3. Dispositif selon la revendication 1 ou 2, caractérisé par le fait qu'il est prévu, pour le positionnement de l'élément de réglage (8), une commande à came palpée par des galets de came.

4. Dispositif selon la revendication 3, caractérisé par le fait que la commande à came consiste en des segments de came, qui sont disposés fixes dans la zone d'une roue de soufflage montée de manière à pouvoir tourner.

5. Dispositif selon l'une des revendications 1 à 4, caractérisé par le fait que le levier articulé (12) présente une fente longitudinale (13) pour le guidage de l'élément de réglage (8).

6. Dispositif selon l'une des revendications 1 à 5, caractérisé par le fait que le levier articulé (12) est pourvu d'un arbre (14) dans la zone de son étendue tournée à l'opposé de l'élément de réglage (8), pour une liaison avec un élément de commande.

7. Dispositif selon l'une des revendications 1 à 6, caractérisé par le fait que l'élément de réglage (8) est relié, par l'intermédiaire d'éléments de liaison, à des galets de guidage (27), qui sont guidés dans la zone de rails (20, 21), qui s'étendent dans la direction de la ligne médiane (9).

8. Dispositif selon l'une des revendications 1 à 7, caractérisé par le fait que le dispositif de verrouillage (17) est réalisé sous la forme d'une crémaillère (39) qui est reliée, par l'intermédiaire de traverses (40), à des tiges de verrouillage (41), qui pénètrent dans des évidements (15, 16) des porte-moule (1, 2).

9. Dispositif selon la revendication 8, caractérisé par le fait que les tiges de verrouillage (41) sont suspendues à la Cardan par rapport à la crémaillère (39).

10. Dispositif selon l'une des revendications 1 à 9, caractérisé par le fait que les porte-moule (1, 2) présentent des parties saillantes (42), qui sont chacune pourvues d'un évidement (15) et entre lesquelles est guidée, dans une position fermée, une partie saillante (43), reliée au porte-moule (2) et présentant l'évidement (16).

11. Dispositif selon l'une des revendications 1 à 10, caractérisé par le fait que, pour immobiliser la crémaillère (39) dans une position ouverte des porte-moule (1, 2), il est prévu un élément de sécurité (28),qui présente un élément de blocage (29), qui est dévié vers une position déverrouillée lors d'une fermeture des porte-moule (1, 2).

12. Dispositif selon l'une des revendications 1 à 11, caractérisé par le fait que l'un des éléments de moule de formage (33, 34) est disposé de manière à être bloqué, par un élément de réglage (36), par rapport à l'un des porte-moule (1, 2).
